(19) Europäisches Patentamt / European Patent Office / Office européen des brevets

(11) EP 1 797 141 B1

(12) FASCICULE DE BREVET EUROPEEN

(45) Date de publication et mention de la délivrance du brevet:
**20.08.2008 Bulletin 2008/34**

(21) Numéro de dépôt: **05804714.3**

(22) Date de dépôt: **06.10.2005**

(51) Int Cl.:
***C08L 77/00*** *(2006.01)* ***C08G 81/00*** *(2006.01)*
***B29B 9/06*** *(2006.01)* ***B29B 9/12*** *(2006.01)*

(86) Numéro de dépôt international:
**PCT/FR2005/002462**

(87) Numéro de publication internationale:
**WO 2006/040443 (20.04.2006 Gazette 2006/16)**

(54) **PROCEDE DE PREPARATION DE PARTICULES A BASE DE POLYMERE THERMOPLASTIQUE ET POUDRE AINSI OBTENUE.**

VERFAHREN ZUR HERSTELLUNG VON PARTIKELN AUS THERMOPLASTISCHEN POLYMEREN UND DARAUS GEWONNENES PULVER

METHOD FOR PRODUCTION OF PARTICLES MADE FROM THERMOPLASTIC POLYMERS AND POWDER OBTAINED THUS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.10.2004 FR 0410628**

(43) Date de publication de la demande:
**20.06.2007 Bulletin 2007/25**

(73) Titulaire: **Rhodia Chimie SA**
**92512 Boulogne-Billancourt Cedex (FR)**

(72) Inventeurs:
- **HERVE, Pascal**
**F-69002 LYON (FR)**
- **PAULO, Christophe**
**69300 Caluire et Cuire (FR)**
- **ROCHE, Eric**
**F-38200 LUZINAY (FR)**
- **LABEILLE, Marc**
**F-69390 VOURLES (FR)**
- **TOURAUD, Franck**
**F-27200 VERNON (FR)**

(74) Mandataire: **Valentino, Cédric**
**Rhodia Services - DPI**
**CRTL - 85, avenue des frères Perret**
**69190 Saint-Fons (FR)**

(56) Documents cités:
**WO-A-94/06059** **WO-A-03/051993**
**FR-A- 2 743 077** **FR-A- 2 793 252**

- **DATABASE WPI Section Ch, Week 200136 Derwent Publications Ltd., London, GB; Class A23, AN 2001-341574 XP002369223 & JP 2001 114901 A (TECHNOLOGY RESOURCES INC KK) 24 avril 2001 (2001-04-24)**
- **DATABASE WPI Section Ch, Week 199517 Derwent Publications Ltd., London, GB; Class A23, AN 1995-125824 XP002334520 & JP 07 047545 A (MITSUBISHI KASEI CORP) 21 février 1995 (1995-02-21)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 797 141 B1

## Description

L'invention concerne un procédé de préparation de poudre constituée de particules à base de polymère thermoplastique. Le procédé de l'invention comprend plus particulièrement des étapes de préparation d'un mélange comprenant le polymère thermoplastique et un additif à l'état fondu, de refroidissement du mélange et de récupération de la poudre par délitement. Elle concerne également la poudre susceptible d'être obtenue par le procédé de l'invention.
Les polymères thermoplastiques sous forme de poudre, notamment sous la forme de particules sphériques de diamètre généralement inférieur à 1 mm, de préférence inférieur à 100 $\mu$m, présentent un intérêt pour de nombreuses applications. En effet des poudres de polymère thermoplastique, telles que les poudres de polyamide, sont utilisées notamment comme additif dans les peintures, par exemple dans les peintures pour revêtement des planchers de salles de sport devant posséder des propriétés antidérapantes. Les poudres de polymère thermoplastique sont également introduites dans des produits cosmétiques telles que les crèmes solaires, pour les soins du corps ou du visage et les démaquillants. Elles sont également utilisées dans le domaine des encres et papiers.
Différents procédés d'obtention de poudres de polymère thermoplastique sont connus de l'homme du métier.
Des poudres de polymère thermoplastique peuvent être obtenues par exemple par broyage ou cryobroyage de granulés de polymère thermoplastique de diamètre moyen initial de l'ordre de 3 mm. Néanmoins ces transformations mécaniques par réduction de taille aboutissent souvent à des particules de forme irrégulière et de taille rarement inférieure à 100 $\mu$m. La distribution de taille de ces particules est souvent large et ces dernières peuvent difficilement être mises en oeuvre à l'échelle industrielle.
Il est également connu de préparer des poudres de polymère thermoplastique par dissolution de polymère dans un solvant puis précipitation. Les solvants des polymères tels que le polyamide par exemple, étant très corrosifs et volatils, les conditions de sécurité sont strictes et ce procédé ne peut être mis en oeuvre à une échelle industrielle. De plus il est difficile selon ce procédé de contrôler la forme des particules, ce qui peut être gênant pour certaines applications.
Les documents WO9406059 et JP2001114901 décrivent un procédé de fabrication de poudres de polymère par dispersion dans un composé incompatible avec ledit polymère. Ces procédés demandent de grandes quantités de ces composés incompatibles dispersant et ne permettent pas de parfaitement contrôler la forme et la taille des particules.
D'autres procédés existent, selon lesquelles les poudres de polymère thermoplastique sont préparées *in situ* lors de la polymérisation des monomères du polymère.
Par exemple, il est connu d'obtenir des poudres de polymère tel que le polyamide par polymérisation anionique de lactames en solution. La polymérisation est réalisée en présence des monomères, d'un solvant des monomères, d'un amorceur, d'un catalyseur, d'un activateur et la polymérisation est réalisée sous agitation à une température voisine de 110°C. Ce procédé est spécifique aux polyamides obtenus à partir de monomères de type lactames. Il est peu flexible et ne permet pas de diversifier la nature des poudres en fonction des propriétés finales de la poudre recherchées, en faisant varier la nature des monomères par exemple. Il est également connu d'obtenir des poudres de copolyesteramide par polymérisation anionique de lactames et de lactones. Ces procédés par voie polymérisation anionique sont difficiles à maîtriser du fait de la grande réactivité de la voie anionique notamment.
Un des buts de l'invention est de proposer un procédé de fabrication d'une poudre de matière thermoplastique comprenant des particules de faibles dimension, avec une répartition granulométrique resserrée et de forme sensiblement régulière.
A cet effet, l'invention propose un procédé de fabrication de poudre de matériau thermoplastique comprenant des particules de diamètre moyen inférieur à 1 mm, caractérisé en ce qu'il consiste à :

a. Former un mélange fondu dudit matériau thermoplastique P avec un composé ou additif A, constitué par un matériau polymérique comprenant au moins une partie de sa structure compatible avec ledit matériau thermoplastique et au moins une partie de sa structure non compatible et insoluble dans ledit matériau thermoplastique pour obtenir une dispersion de particules discrètes de matériau thermoplastique P,
b. Refroidir ledit mélange à une température inférieure à la température de ramollissement du matériau thermoplastique,
c. Traiter ledit mélange refroidi pour provoquer le délitement des particules discrètes de matériau thermoplastique.

Selon une autre caractéristique de l'invention, la formation du mélange est obtenue par fusion de matériau thermoplastique et addition du composé A sous forme solide ou fondu et application d'une énergie de mélange pour obtenir la formation des particules discrètes de matériau thermoplastique dispersées dans une phase avantageusement continue formée par le composé A.
Ce mélange peut être obtenu dans un autre mode de réalisation de l'invention, par mélange à l'état solide de particules dudit matériau thermoplastique P et des particules dudit additif A, et fusion du mélange de particules avec application sur le mélange fondu d'une énergie de mélange pour obtenir la formation de particules discrètes de matériau

thermoplastique P dispersées dans une phase avantageusement continue formée par le composé A.

Selon encore une autre caractéristique de l'invention, la concentration pondérale en additif A dans le mélange est comprise entre 1 % et 50%, avantageusement entre 3% et 30%.

Plus généralement, le mélange peut être obtenu par tout dispositif convenable tel que les mélangeurs à vis sans fin ou à agitateurs compatible avec les conditions de température et de pression utilisées pour la mise en oeuvre des matériaux thermoplastiques.

Selon un mode de réalisation préféré de l'invention, le mélange fondu est mis en forme avant l'étape de refroidissement, par exemple sous forme de filaments ou joncs. Cette mise en forme peut être avantageusement réalisée par un procédé d'extrusion à travers une filière.

Selon un mode de réalisation préféré de l'invention, notamment quand le mélange fondu est mis en forme, ce mélange fondu est préférentiellement réalisé dans une extrudeuse alimentant la filière d'extrusion.

Le refroidissement du mélange fondu peut être réalisé par tout moyen approprié. Parmi ceux-ci, le refroidissement pneumatique ou le trempage dans un liquide sont préférés.

L'étape de récupération de la poudre de matériau thermoplastique consiste avantageusement, en un traitement de délitement des particules discrètes de matériau thermoplastique. Ce délitement peut être obtenu par application d'une force de cisaillement sur le mélange refroidi.

Selon un autre mode de réalisation de l'invention, le délitement des particules en matériau thermoplastique est obtenu par trempage du mélange fondu refroidi dans un liquide, non solvant du matériau thermoplastique et avantageusement solvant de l'additif A.

Le procédé de l'invention permet d'obtenir une poudre de matériau thermoplastique comprenant des particules de forme polyhédrique régulier ou irrégulier. Ces particules constituant la poudre de matériau thermoplastique ont un volume poreux égal ou voisin de 0 $cm^3/g$ car les particules ne présentent aucune porosité.

Le procédé de l'invention permet de fabriquer des poudres à partir de tout matériau thermoplastique.

A titre d'exemple de polymère thermoplastique, on peut citer les polyamides, les polyesters, les polyuréthanes, les polyoléfines telles que le polyéthylène ou le polypropylène, le polystyrène etc.

Selon un mode de réalisation particulier du procédé de l'invention, les polymères thermoplastiques préférés sont les polyamides.

Tout polyamide connu de l'homme du métier peut être utilisé dans le cadre de l'invention. Le polyamide est généralement un polyamide du type de ceux obtenus par polycondensation à partir de diacides carboxyliques et de diamines, ou du type de ceux obtenus par polycondensation de lactames et/ou aminoacides. Le polyamide de l'invention peut être un mélange de polyamides de différents types et/ou du même type, et/ou des copolymères obtenus à partir de différents monomères correspondant au même type et/ou à des types différents de polyamide.

A titre d'exemple de polyamide pouvant convenir pour l'invention, on peut citer le polyamide 6, le polyamide 6,6, le polyamide 11, le polyamide 12, les polyamides 4,6 ; 6,10; 6,12; 12,12, 6,36 ; les polyamides semi-aromatiques, par exemple les polyphtalamides obtenus à partir d'acide téréphtalique et/ou isophtalique tels que le polyamide commercialisé sous le nom commercial AMODEL, leurs copolymères et alliages.

Selon un mode de réalisation préférentiel de l'invention, le polyamide est choisi parmi le polyamide 6, le polyamide 6,6, leurs mélanges et copolymères.

Selon un mode particulier de réalisation de l'invention, le polymère thermoplastique est un polymère comprenant des chaînes macromoléculaires étoile. Les polymères comprenant de telles chaînes macromoléculaires étoiles sont par exemple décrits dans les documents FR 2.743.077, FR 2.779.730, US 5.959.069, EP 0.632.703, EP 0.682.057 et EP 0.832.149. Ces composés sont connus pour présenter une fluidité améliorée par rapport à des polyamides linéaires de même masse moléculaire.

Selon un autre mode de réalisation particulier de l'invention, le polymère thermoplastique est un polycondensat constitué de :

- 30 à 100% molaire (bornes comprises) de chaînes macromoléculaires répondant à la formule (I) suivante :

$$R_3\text{-}(X\text{-}R_2\text{-}Y)_n\text{-}X\text{-}A\text{-}R_1\text{-}A\text{-}X\text{-}(Y\text{-}R_2\text{-}X)_m\text{-}R_3 \qquad (I)$$

- 0 à 70% molaire (bornes comprises) de chaînes macromoléculaires répondant à la formule (II) suivante

$$R_4\text{-}[Y\text{-}R_2\text{-}X]_p\text{-}R_3 \qquad (II)$$

dans lesquelles

- X-Y- est un radical issu de la polycondensation de deux fonctions réactives $F_1$ et $F_2$ telles que

  - $F_1$ est le précurseur du radical -X- et $F_2$ le précurseur du radical -Y- ou inversement,
  - les fonctions $F_1$ ne peuvent réagir entre elles par-condensation
  - les fonctions $F_2$ ne peuvent réagir entre elles par condensation

- A est une liaison covalente ou un radical hydrocarboné aliphatique pouvant comprendre des hétéroatomes et comprenant de 1 à 20 atomes de carbone.
- $R_2$ est un radical hydrocarboné aliphatique ou aromatique ramifié ou non comprenant de 2 à 20 atomes de carbone.
- $R_3$, $R_4$ représente l'hydrogène, un radical hydroxyle ou un radical hydrocarboné
- $R_1$ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 50 et 500, préférentiellement entre 100 et 400.

Un tel polycondensat est décrit dans la demande WO 05/019510 incorporée par référence. Avantageusement le polycondensat est un polyamide constitué de :

- 30 à 100% molaire (bornes comprises) de chaînes macromoléculaires répondant à la formule (I) suivante :

$$R_3\text{-}(X\text{-}R_2\text{-}Y)_n\text{-}X\text{-}A\text{-}R_1\text{-}A\text{-}X\text{-}(Y\text{-}R_2\text{-}X)_m\text{-}R_3 \qquad (I)$$

- 0 à 70% molaire (bornes comprises) de chaînes macromoléculaires répondant à la formule (II) suivante

$$R_4\text{-}[Y\text{-}R_2\text{-}X]_p\text{-}R_3 \qquad (II)$$

dans lesquelles :

- Y est le radical

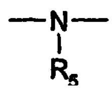

  quand X représente le radical

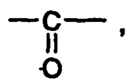

- Y est le radical

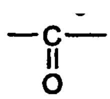

  quand X représente le radical

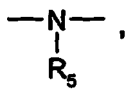

- A est une liaison covalente ou un radical hydrocarboné aliphatique pouvant comprendre des hétéroatomes et comprenant de 1 à 20 atomes de carbone.
- $R_2$ est un radical hydrocarboné aliphatique ou aromatique ramifié ou non comprenant de 2 à 20 atomes de carbone.
- $R_3$, $R_4$ représente l'hydrogène, un radical hydroxyle ou un radical hydrocarboné comprenant un groupement

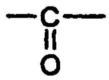 ou 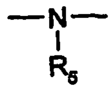

- $R_5$ représente l'hydrogène ou un radical hydrocarboné comprenant de 1 à 6 atomes de carbone
- $R_1$ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 50 et 500, préférentiellement entre 100 et 400.

Les polymères thermoplastiques utilisés dans l'invention peuvent contenir différents additifs tels que matifiants, stabilisants chaleur, stabilisants lumière, pigments, colorants, charges, notamment charges abrasives. A titre d'exemple, on peut notamment citer l'oxyde de titane, l'oxyde de zinc, l'oxyde de cérium, la silice ou le sulfure de zinc utilisés comme matifiant et/ou abrasif.

Selon une autre caractéristique de l'invention, l'additif A est, avantageusement, un polymère du type bloc, séquencé, peigne, hyperbranché ou étoile. Ainsi, la structure compatible avec le matériau thermoplastique forme un bloc, une séquence, le squelette ou les dents du peigne, le coeur ou les branches du polymère étoile ou de l'hyperbranché.

Selon un mode de réalisation préféré de l'invention, la structure compatible de l'additif A comprend des fonctions chimiquement identiques à celles du polymère thermoplastique P.

Selon le mode de réalisation préféré de l'invention, l'additif A est choisi dans le groupe constitué par un polymère D défini ci-dessous ou un polymère hyperbranché E comprenant au moins un bloc de polyoxyde d'alkylène. Ledit polymère D est un polymère à propriétés thermoplastiques comprenant un bloc de polymère thermoplastique et au moins un bloc de polyoxyde d'alkylène tels que :

- le bloc de polymère thermoplastique comprend une chaîne macromoléculaire étoile ou H comprenant au moins un coeur multifonctionnel et au moins une branche ou un segment de polymère thermoplastique relié au coeur, le coeur comprenant au moins trois fonctions réactives identiques
- le ou les blocs de polyoxyde d'alkylène sont reliés à au moins une partie des extrémités libres de la chaîne macromoléculaire étoile ou H, choisie parmi les extrémités de branche ou segment de polymère thermoplastique et les extrémités du coeur multifonctionnel

De tels polymères thermoplastiques et leur procédé d'obtention sont notamment décrits dans le document WO 03/002668 incorporé par référence.

La chaîne macromoléculaire étoile du polymère D est avantageusement un polyamide étoile obtenu par copolymérisation à partir d'un mélange de monomères comprenant :

a) un composé multifonctionnel comprenant au moins trois fonctions réactives identiques choisies parmi la fonction amine et la fonction acide carboxylique

b) des monomères de formules générales (IIa) et/ou (IIb) suivantes :

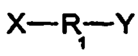 (IIa) 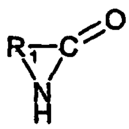 (IIb)

c) le cas échéant des monomères de formule générale (III) suivante :

$$Z\text{-}R_2\text{-}Z \qquad (III)$$

dans lesquelles :

- Z représente une fonction identique à celle des fonctions réactives du composé multifonctionnel
- $R_1$, $R_2$ représentent des radicaux hydrocarbonés aliphatiques, cycloaliphatiques ou aromatiques, substitués ou non, identiques ou différents, comprenant de 2 à 20 atomes de carbone, et pouvant comprendre des hétéroatomes,

- Y est une fonction amine primaire quand X représente une fonction acide carboxylique, ou
- Y est une fonction acide carboxylique quand X représente une fonction amine primaire,

La chaîne macromoléculaire H du bloc de polymère thermoplastique du polymère D est avantageusement un polyamide H obtenu par copolymérisation à partir d'un mélange de monomères comprenant :

a) un composé multifonctionnel comprenant au moins trois fonctions réactives identiques choisies parmi la fonction amine et la fonction acidecarboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,

les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

Avantageusement, le composé multifonctionnel des chaînes macromoléculaires étoile ou H est représenté par la formule (IV)

$$R1-\left[-A-z\right]_m \quad \textbf{(IV)}$$

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

De préférence le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

Le bloc de polyoxyde d'alkylène POA du polymère D est de préférence linéaire. Il peut être choisi parmi les blocs polyoxyde d'éthylène, polytriméthylène oxyde, polytetraméthylène oxyde. Dans le cas où le bloc est à base de polyoxyde d'éthylène, il peut comporter aux extrémités du bloc des motifs propylène glycol. Le bloc de polyoxyde d'alkylène du polymère D est de préférence un bloc de polyoxyde d'éthylène.

Avantageusement toutes les extrémités libres de la chaîne macromoléculaire du bloc de polymère themoplastique du polymère D sont reliées à un bloc de polyoxyde d'alkylène.

Par polymère hyperbranché E selon l'invention, on entend une structure polymérique ramifiée obtenue par polymérisation en présence de composés ayant une fonctionnalité supérieure à 2, et dont la structure n'est pas parfaitement contrôlée. Il s'agit souvent de copolymères statistiques. Les polymères hyperbranchés peuvent par exemple être obtenus par réaction entre, notamment, des monomères plurifonctionnels, par exemple trifonctionnels et bifonctionnels, chacun des monomères étant porteur d'au moins deux fonctions réactives différentes de polymérisation.

Avantageusement le polymère hyperbranché E de l'invention est choisi parmi les polyesters, les polyesteramides et les polyamides hyperbranchés.

Le polymère hyperbranché E de l'invention est de préférence un copolyamide hyperbranché du type de ceux obtenus par réaction entre :

- au moins un monomère de formule (I) suivante :

  (I) $A\text{-}R\text{-}B_f$

  dans laquelle **A** est une fonction réactive de polymérisation d'un premier type, **B** est une fonction réactive de polymérisation d'un second type et capable de réagir avec **A, R** est une entité hydrocarbonée, et f est le nombre total de fonctions réactives B par monomère : $f \geq 2$, de préférence $2 \leq f \leq 10$ ;
- au moins un monomère de formule (II) suivante :

(II) **A'-R'-B'** ou les lactames correspondants,

dans laquelle **A', B', R'** ont la même définition que celle donnée ci-dessus respectivement pour **A, B, R** dans la formule **(I)**

- au moins un monomère «coeur» de formule (**III**) suivante ou au moins un monomère « limiteurs de chaîne » de formule **(IV)** suivante :

(III) $\mathbf{R^1(B")_n}$

dans laquelle :

- $R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- **B**" est une fonction réactive de même nature que **B** ou **B**' ;
- n ≥ 1, de préférence 1 ≤ n ≤ 100

(IV) $\mathbf{R^2\text{-}A"}$

dans laquelle :

- $R^2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et **A"** est une fonction réactive de même nature que **A** ou **A'.**

le rapport molaire I/II se définissant comme suit :

$$0,05 < I/II$$

et de préférence

$$0,125 \leq I/II \leq 2 ;$$

au moins l'une des entités R ou R' d'au moins l'un des monomères (I) ou (II) étant aliphatique, cycloaliphatique ou arylaliphatique

$R_1$ et/ou $R_2$ étant des radicaux polyoxyalkylènes

De tels copolyamides sont décrits dans le document WO 00/68298 A1, incorporé par référence, notamment à la page 11 lignes 3 à 6.

Les fonctions réactives de polymérisation **A, B, A', B'** sont avantageusement choisies dans le groupe comprenant les fonctions carboxyliques et amines.

Le monomère de formule (**I**) du copolyamide hyperbranché est avantageusement un composé dans lequel A représente la fonction amine, B la fonction carboxylique, R un radical aromatique et f = 2.

$R_1$ et/ou $R_2$ sont avantageusement des radicaux polyoxyalkylènes aminés de type Jeffamine®.

La composition, outre le polymère P et l'additif A, peut comprendre d'autres composés.

Dans un mode de réalisation de l'invention, l'additif A est utilisé en combinaison avec un composé B qui est insoluble et non compatible avec le matériau thermoplastique P. Avantageusement ce composé B a une structure chimique compatible avec au moins une partie de la structure du composé A, notamment la partie de structure non compatible avec le composé P. Comme exemple de composés B convenables pour l'invention, on peut citer les composés appartenant aux familles des polysaccharides, polyoxyalkylènegycols, polyoléfines. Le composé B peut être ajouté de manière séparée du composé A ou sous forme de mélange avec au moins une partie du composé A.

Il peut également être pré mélangé avec le matériau P.

Toute méthode connue de l'homme du métier pour préparer un mélange peut être utilisée pour préparer le mélange selon l'invention. On peut par exemple réaliser un mélange intime des granulés de polymère thermoplastique P et de l'additif A, ou un mélange des granulés de polymère thermoplastique P et des granulés de l'additif A. Le polymère thermoplastique P peut également se présenter sous la forme de granulés, que l'on enrobe par l'additif. L'additif A peut être introduit dans le polymère P lors du procédé de polymérisation, avantageusement en fin de polymérisation. Il est également possible d'introduire l'additif A dans le polymère à l'état fondu.

L'étape a) consiste à préparer le mélange à l'état fondu, sous agitation.

Cette étape est avantageusement réalisée dans tout dispositif de malaxage compatible avec les conditions de

pression et température de mise en oeuvre des matériaux thermoplastiques. L'étape a) est de préférence réalisée dans une extrudeuse, encore plus préférentiellement dans une extrudeuse bi-vis ou multivis.

Le mélange peut être préparé selon un mode décrit ci-dessus, puis introduit dans le dispositif d'extrusion mis en oeuvre lors de l'étape a). Le mélange peut être introduit sous forme solide ou liquide, par exemple à l'état fondu.

Le mélange peut également être préparé *in situ* dans le même dispositif d'extrusion que celui mis en oeuvre lors de l'étape a).

L'agitation lors de l'étape a) permet un cisaillement de la composition et un mélange efficace du matériau thermoplastique et de l'additif A. L'énergie de cisaillement appliquée est déterminée en fonction de la nature des produits à mélanger et de la taille souhaitée des particules de matériau thermoplastique.

Le mélange, avant d'être refroidi selon l'étape b), peut être extrudé à travers une filière pour être mise en forme de jonc, de fil, de film d'une manière classique et connue de l'homme du métier.

L'étape b) consiste à refroidir le mélange pour solidifier au moins le polymère thermoplastique. Ce refroidissement peut être réalisé de manière classique à l'aide d'air ou d'eau

L'étape de délitation des particules de polymère thermoplastique à partir du mélange refroidi peut être mise en oeuvre selon différents procédés.

Ainsi, un premier procédé consiste en l'application d'une force mécanique , telle qu'un frottement, un cisaillement, une torsion, nécessaire pour provoquer ce délitement ; Dans un autre mode de réalisation, le délitement intervient instantanément quand le mélange refroidi est introduit dans un liquide tel que de l'eau, par exemple.

Dans, encore un autre mode de réalisation, le liquide est avantageusement un solvant de l'additif A. Ainsi, il est possible de récupérer, en grande partie, l'additif A pour pouvoir, par exemple le réutiliser. De plus, la poudre de polymère thermoplastique comprendra une quantité plus faible d'impuretés ou d'additif A.

Dans d'autre cas, il peut être intéressant de ne pas éliminer l'additif A qui restera présent à la surface des particules de matériau thermoplastique, modifiant ainsi les propriétés de surface de ces particules.

Avantageusement les étapes b) et c) sont réalisées simultanément. Par exemple on peut introduire le mélange après extrusion à travers une filière directement dans un réacteur comprenant un solvant de l'additif A et un non-solvant du polymère P.

Les particules de polymère P sont éventuellement isolées de la solution solvant/additif A. L'isolement peut être réalisée par tout moyen permettant de séparer d'une phase liquide, une phase solide en suspension. L'isolement peut consister par exemple en une filtration, une décantation, une centrifugation, une atomisation.

S'il s'agit par exemple d'une dispersion aqueuse, l'isolement peut être réalisé par exemple par atomisation pour récupérer une poudre comprenant des particules élémentaires de taille équivalente à celles présentes dans la dispersion et/ou des agrégats de particules. Ces agrégats sont généralement facilement redispersables dans un milieu aqueux tel que l'eau ou cassés par application de vibrations sur la poudre. D'autres moyens d'élimination de l'eau ou récupération de la poudre peuvent être utilisés tels que la filtration ou la centrifugation puis le séchage du gâteau de filtration.

Les particules de polymère P ainsi obtenues peuvent être lavées et séchées.

Le procédé de l'invention permet l'obtention de particules à géométrie contrôlée, notamment en ajustant l'agitation lors de l'étape a), la nature des composés A et/ou B, la température et la concentration des différents composants du mélange.

Un des objets de l'invention est les poudres de matériau thermoplastiques susceptibles d'être obtenues par le procédé de l'invention.

Avantageusement les particules obtenues selon le procédé de l'invention sont des particules sphériques.

Par particule sphérique, on entend une particule de forme essentiellement sphérique.

De préférence le diamètre moyen de ces particules sphériques est inférieur à 100 $\mu$m.

Par diamètre moyen, on entend la valeur sur laquelle la distribution de la taille des particules est centrée.

Avantageusement les particules obtenues selon le procédé de l'invention présentent un diamètre moyen inférieur ou égal à 30 $\mu$m. De préférence elles présentent un diamètre moyen inférieur ou égal à 10 $\mu$m, encore plus préférentiellement inférieur ou égal à 5 $\mu$m, notamment des particules de diamètre inférieur à 1$\mu$m notamment des particules de diamètre de l'ordre de 0,1 $\mu$m. La distribution de taille des particules est généralement déterminée par granulométrie laser selon une méthode connue de l'homme du métier.

D'autres détails ou avantages de l'invention apparaîtront plus clairement à la vue des exemples donnés ci-dessous et en référence à la figure annexée, qui représente une photographie de la dispersion obtenue.

**Exemple 1 :**

Les matières utilisées sont :

Polymère P : polyamide 66 de viscosité relative de 2.6

Additif A : copolymère polyamide - polyoxyde d'alkylène étoile hydrophile réalisé de la façon suivante :

Dans une autoclave de 7.5 litres équipée d'un agitateur mécanique sont introduits : 1116,0 g d'ε-caprolactame (9,86 mol), 57,6 g d'acide 1,3,5-benzène tricarboxylique (0,27 mol), 1826,4g de Jeffamine® M2070 (0,82 mol), 1,9 g d'ULTRANOX® 236 et 3,5 g d'une solution aqueuse à 50% (p/p) d'acide hypophosphoreux.

Le mélange réactionnel est porté à 250°C sous azote et sous pression atmosphérique et maintenu à cette température pendant 1h. Puis le système est progressivement mis sous vide pendant 30 min jusqu'à une pression de 5 mbars, puis maintenu sous vide pendant une heure supplémentaire. Le système est ensuite coulé sur un plateau.

On introduit dans une extrudeuse double vis 24D Prism, commercialisée par la Société Thermo Electron Corporation, des granulés de Polymère P à l'aide d'une alimentation volumétrique et de l'additif A sous forme de pastilles à l'aide d'une alimentation pondérale. Les débits des deux doseurs sont réglés de façon à obtenir un mélange à 10% en poids de l'additif A. Le mélange est extrudé à un débit de 1.66 kg/heure. Les températures des différentes plages de l'extrudeuse sont comprises entre 265 et 295°C. La vitesse est fixée à 200 r.p.m. La pression enregistrée est comprise entre 11 et 12 bars. Les joncs obtenus sont trempés en sortie de filière par un flux d'eau, recueillis dans une panière métallique, égouttés puis séchés.

Les joncs collectés sont ensuite dispersés dans de l'eau par simple agitation mécanique. La dispersion ainsi obtenue est tamisée avec un tamis 200μm pour éliminer les impuretés solides de grande taille telles que des morceaux de jonc non dispersables. Le rendement pondéral de récupération après tamisage, est supérieur à 97%. La distribution granulométrique des particules contenues dans la dispersion est mesurée à l'aide d'un appareil dénommé MasterSizer 2000 commercialisé par la société Malvern instruments. Cette distribution, exprimée en volume, obtenue après application d'Ultrasons, est unimodale et centrée sur un diamètre de particules de 0,750 μm. Elle est illustrée à la figure 1 annexée qui représente une photographie de la dispersion obtenue.

La dispersion aqueuse est ensuite séchée en étuve ventilée pour récupérer une poudre de polyamide comprenant des particules élémentaires de taille équivalente à celles présentes dans la dispersion et/ou des agrégats de particules. Ces agrégats sont facilement re-dispersés dans un milieu aqueux tel que l'eau ou cassés par application d'ultrasons.

**Exemples 2-14 :**

Pour ces exemples, les matières utilisées sont :

Polymère P : Polyamide 66 de Viscosité relative de 2.6
Additif A : Un copolymère polyamide- polyoxyde d'alkylène étoile hydrophile tel que décrit dans l'exemple 1.

On introduit dans une extrudeuse double vis 24D Prism, commercialisé par la Société Thermo Electron Corporation, des granulés de Polymère P à l'aide d'une alimentation volumétrique et de l'additif A sous forme de pastilles à l'aide d'une alimentation pondérale. Les débits des deux doseurs sont réglés de façon à pouvoir faire varier la concentration de l'additif A. Les conditions d'extrusion : le débit en kg/heure et la vitesse en r.p.m pour chaque mélange sont présentées dans le tableau I ci-dessous. Les températures des différentes plages de la vis d'extrusion sont comprises entre 260 et 300 °C.

Les joncs obtenus sont trempés en sortie de filière par un flux d'eau, recueillis dans une panière métallique, égouttés puis séchés.

Les joncs collectés sont ensuite dispersés dans de l'eau par simple agitation mécanique. La dispersion obtenue est tamisée et caractérisée selon la procédure décrite dans l'exemple 1 et les résultats sont présentés dans le Tableau I ci-dessous.

**Tableau I**

| Exemple n° | Additif A (%) | Débit (kg/h) | Vitesse (R.P.M) | Taille (μm) |
|---|---|---|---|---|
| 2 | 10 | 2.28 | 150 | 1.10 |
| 3 | 10 | 2.42 | 500 | 0.83 |
| 4 | 12.5 | 2.06 | 150 | 1.10 |
| 5 | 12.5 | 1.98 | 450 | 0.83 |
| 6 | 15 | 1.92 | 200 | 0.96 |
| 7 | 15 | 2.1 | 500 | 0.96 |

(suite)

| Exemple n° | Additif A (%) | Débit (kg/h) | Vitesse (R.P.M) | Taille (μm) |
|---|---|---|---|---|
| 8 | 17.5 | 1.82 | 150 | 1.44 |
| 9 | 17.5 | 1.86 | 450 | 0.96 |
| 10 | 20 | 1.98 | 200 | 1.44 |
| 11 | 20 | 1.42 | 500 | 0.72 |
| 12 | 30 | 2.44 | 250 | 2.90 (large) |
| 13 | 40 | 1.52 | 150 | 3.50 (large) |
| 14 | 40 | 1.62 | 450 | 1.26 |

**Exemples 15-18 :**

Dans ces exemples le polymère P thermoplastique utilisé est :

Polymère P1 : Polyamide 6 Viscosité relative de 2.7 ou
Polymère P2 : Polyamide 6 Viscosité relative de 4.0
L'additif A est identique à celui utilisé dans les exemples précédents.

On introduit dans une extrudeuse double vis 24D de type Prism, commercialisé par la Société Thermo Electron Corporation, des granulés de Polymère P (P1 ou P2) à l'aide d'une alimentation volumétrique et de l'additif A sous forme de pastilles à l'aide d'une alimentation pondérale. Les débits des deux doseurs sont réglés de façon à pouvoir faire varier la quantité en additif A dans le mélange (Voir tableau II ci-dessous). Les mélanges sont extrudés à un débit fixé entre 1.9 et 2.2 kg/heure. Les températures des différentes plages de l'extrudeuse sont comprises entre 245 et 280°C. La vitesse est fixée à 200 rpm. La pression enregistrée est de 11 bar. Les joncs obtenus sont trempés en sortie de filière par un flux d'eau, recueillis dans une panière métallique, égouttés puis séchés.

Les joncs collectés sont ensuite dispersés dans de l'eau par simple agitation mécanique. La dispersion obtenue est tamisée et caractérisée selon la procédure décrite dans l'exemple 1. Les rendements pondéraux de récupération du matériau engagé sont supérieurs à 90%. Les distributions granulométriques des particules de Polyamide 6 dans la dispersion sont unimodales et le diamètre central des particules de chacune des compositions est indiqué dans le tableau ci-dessous.

**Tableau II**

| Exemple n° | Polymère | Additif A (%) | Débit (kg/h) | Taille μm |
|---|---|---|---|---|
| 15 | P1 | 11 | 1.9 | 0.725 |
| 16 | P1 | 20 | 2.2 | 1.1 |
| 17 | P2 | 11 | 1.9 | 1.9 |
| 18 | P2 | 22.5 | 2.1 | 0.950 |

**Exemple 19 :**

On opère dans un réacteur métallique de 300ml de capacité, équipé d'une agitation mécanique de type ruban hélicoidal, d'une entrée d'azote et d'une colonne à distiller en sortie.

On introduit 288.5g de solution de sel Nylon 66 à 52% dans l'eau (sel d'adipate hexamethylène diamine), soit 0.5717mol de sel Nylon. Le réacteur est ensuite purgé à l'azote puis chauffé à 126°C en 45 min, pour concentrer le sel Nylon à 70%. Toutes les vannes du réacteur sont fermées, et la température est augmentée à 231 °C en 27 min. La pression atteint ainsi 16.5 Bar. Le réacteur est laissé au plateau de pression durant 48min pendant que la température augmente à 250°C. Le mélange réactionnel est ensuite décomprimé sur 36 min, et la température augmentée jusqu'à 272°C pendant cette période.
32.35g de l'additif A, un copolymère polyamide- polyoxyde d'alkylène étoile hydrophile réalisé tel que décrit dans l'exemple 1, sont ajoutés sous forme solide sur une période de 5 min.

Le mélange réactionnel est ensuite maintenu sous agitation à 272°-C pendant 25 min supplémentaires.

Le contenu du réacteur est alors coulé, sous une légère surpression d'azote, dans 900g d'eau distillée. Par simple agitation, on obtient une dispersion de particules de Polymère P Cette dispersion est tamisée et la distribution granulométrique est mesurée selon une procédure identique à celle décrite dans l'exemple 1. La distribution de la dispersion est unimodale et le pic de granulométrie est centré sur 950 nm.

**Exemples 20-24**

Dans ces exemples, les matières utilisées sont un polymère thermoplastique P constitué par un polyamide 66 de viscosité relative 2.6 et d'un additif A qui est un des composés ci-dessous:

Additif A : Un copolymère polyamide- polyoxyde d'alkylène étoile hydrophile tel que décrit dans l'exemple 1.

Additif A2 : Un copolymère dibloc polyamide - polyoxyde d'alkylène préparé de la façon suivante :

Dans un réacteur de 500ml équipé d'une agitation mécanique sont introduits : 73,3 g d'ε-caprolactame (648 mmol), 7,9 g d'acide benzoique (65 mmol), 138,8g de Jeffamine® M2070 (65 mmol), 128 mg d'Ultranox® 236 et 185 µl d'une solution aqueuse à 50% (p/p) d'acide hypophosphoreux.

Le mélange réactionnel est porté à 160°C sous azote et sous pression atmosphérique et maintenu à cette température pendant 3 heures. Le milieu réactionnel est ensuite porté à 250°C puis maintenu à cette température pendant 1 h. Puis le système est progressivement mis sous vide pour atteindre une pression de 5 mbars, puis maintenu sous vide pendant deux heures supplémentaires. 195g de polymère sont recueillis en fin de synthèse.

Additif A3 : Un copolymère tribloc polyamide - polyoxyde d'alkylène préparé de la façon suivante :

La réaction est effectuée dans le même réacteur et dans les mêmes conditions de température, agitation et pression que celles employées pour l'additif A2.

83,6 g d'ε-caprolactame (739 mmol), 4,5 g d'acide adipique (31 mmol), 131,9g de Jeffamine® M2070 (62 mmol), 143 mg d'Ultranox® 236 et 208 µl d'une solution aqueuse à 50% (p/p) d'acide hypophosphoreux sont introduits dans le réacteur.
166g de polymère sont recueillis en fin de synthèse.

Additif A4 : Un copolymère tribloc polyamide - polyoxyde d'alkylène préparé de la façon suivante :

La réaction est effectuée dans le même réacteur et dans les mêmes conditions de température, agitation et pression que celles employées pour l'additif A2.

83,3 g d'ε-caprolactame (737 mmol), 5,1 g d'acide téréphtalique (31 mmol), 131,6g de Jeffamine® M2070 (61 mmol), 143 mg d'Ultranox® 236 et 207 µl d'une solution aqueuse à 50% (p/p) d'acide hypophosphoreux sont introduits dans le réacteur.
192g de polymère sont recueillis en fin de synthèse.

Additif A5 : Un copolymère tribloc polyamide - polyoxyde d'alkylène préparé de la façon suivante :

La réaction est effectuée dans le même réacteur et dans les mêmes conditions de température, agitation et pression que celles employées pour l'additif A2.

121,1 g d'ε-caprolactame (1072 mmol), 3,3 g d'acide adipique (22 mmol), 95,6g de Jeffamine® M2070 (45 mmol), 200 mg d'Ultranox® 236 et 289 µl d'une solution aqueuse à 50% (p/p) d'acide hypophosphoreux sont introduits dans le réacteur.
157g de polymère sont recueillis en fin de synthèse.

Dans une mini-extrudeuse bivis conique munie d'un canal de recirculation, commercialisée par la Société DSM Xplore, sous la référence :15ml Twinscrew Compounder, on introduit 10g d'un mélange à 80/20 de granulés du Polymère P (80% en poids) et de l'additif considéré (20% en poids) (Voir tableau III ci-dessous). Le temps de mélange, la température et la vitesse des vis sont respectivement fixés :

t = 4 minutes.
T = 275°C.
V = 100 rpm.

Les joncs obtenus sont trempés en sortie de filière dans un bain d'eau, recueillis, égouttés puis séchés.
Les joncs collectés sont ensuite broyés dans un broyeur commercialisé par la société Retsch sous la référence ZM 1000 (grille de 2mm). Ces joncs broyés sont ensuite dispersés dans de l'eau par simple agitation mécanique. Chacune des dispersions obtenue est ensuite soumise aux ultrasons à l'aide d'une sonde commercialisée par la Société Bioblock Scientific sous la référence VibraCell 72412. Chaque dispersion est ensuite tamisée avec un tamis 200µm pour éliminer les impuretés solides de grande taille telles que des morceaux de jonc non dispersables. Le rendement pondéral de récupération de polymère thermoplastique P après tamisage pour chacune des dispersions est indiquée dans le tableau III ci-dessous. La distribution granulométrique des particules contenues dans chaque dispersion est mesurée à l'aide d'un appareil dénommé MasterSizer 2000 commercialisé par la société Malvern instruments. Cette distribution, exprimée en volume est unimodale et le pic modal de granulométrie exprimé en diamètre de particules est indiqué également dans le Tableau III ci-dessous.

**Tableau III**

| Exemple n° | Additif | Taitte µm | Rendement (%) |
|---|---|---|---|
| 20 | A | 0.68 µm | 97 |
| 21 | A2 | 1.30 µm | 81 |
| 22 | A3 | 2.00 µm | 93 |
| 23 | A4 | 0.93 µm | 93 |
| 24 | A5 | 0.48 µm | 94 |

**Exemples 25-30 :**

Dans ces exemples, les matières utilisées sont un polymère thermoplastique P constitué par un des polymères indiqués ci-dessous :

P1 : Polyamide 6 de viscosité relative 2.7.
P3 : Un polymère obtenu par ajout de 1.3 % en poids (1% en moles) d'acide adipique à la polycondensation du caprolactame. Le procédé de polycondensation est celui d'un polyamide 6 standard. Le polymère obtenu présente un IV de 67 ml/g.
P4 : Un polyamide étoile obtenu par copolymérisation à partir de caprolactame en présence d'environ 0.5% molaire de 2,2,6,6,-tetra(β-carboxyéthyl)cyclohexanone, selon un procédé décrit dans le document FR 2743077.

et d'un additif qui est un des composés ci-dessous:

Additif A : Un copolymère polyamide- polyoxyde d'alkylène étoile hydrophile tel que décrit dans l'exemple 1.
Additif A6 : Un copolymère Tribloc : Polyoxyde d'ethylene -bloc-Polyoxyde de Propylene-bloc-Polyoxyde d'éthylene N° CAS : 9003-11-6 Produit commercialisé par la Société Aldrich (référence catalogue n°412325, Masse Mn ~14600 g/mole ; PEG 82.5% en poids).

Dans une mini-extrudeuse bivis conique munie d'un canal de recirculation, commercialisée par la Société DSM Xplore, sous la référence :15ml Twinscrew Compounder, on introduit 10g d'un mélange de granulés du Polymère P et de l'additif considéré (Les compositions sont indiquées dans le tableau IV ci-dessous). Le temps de mélange, la température et la vitesse des vis sont respectivement fixés :

t = 4 minutes.
T = 250°C.
V = 100 rpm.

Les joncs obtenus sont trempés en sortie de filière dans un bain d'eau, recueillis, égouttés puis séchés.
Les joncs collectés sont ensuite traités comme dans les exemples précédents n°20 à 24. Les résultats en

rendements pondéraux et taille sont indiqués dans le tableau IV ci-dessous.

**Tableau IV**

| Exemple n° | Polymère P | Polymère P (% en poids) | Additif | Additif (% en poids) | Taille (μm) | Rendement (%) |
|---|---|---|---|---|---|---|
| 25 | P1 | 80 | A | 20 | 0.48 | 93 |
| 26 | P1 | 60 | A6 | 40 | 140.00 | 53 |
| 27 | P3 | 80 | A | 20 | 0.37 | 97 |
| 28 | P3 | 60 | A6 | 40 | 12.00 large | 96 |
| 29 | P4 | 80 | A | 20 | 0.34 | 98 |
| 30 | P4 | 60 | A6 | 40 | 35.00 Large | 93 |

**Exemples 31-33 :**

Dans ces exemples, les matières utilisées sont un polymère thermoplastique P constitué par un des polymères indiqués ci-dessous :

P5 : Polyamide 6-12 commercialisé par la Société DEGUSSA sous la référence PA6-12 VESTAMID D16®.
P6 : Polypropylène commercialisé par la Société ATOFINA sous la référence PPH 7059®.
P7 : Polyester commercialisé par la Société VIPO-Polymer NK sous la référence 74A40 PC 95®.

et d'un additif A le copolymère polyamide- polyoxyde d'alkylène étoile hydrophile tel que décrit dans l'exemple 1.

Dans une mini-extrudeuse bivis conique munie d'un canal de recirculation, commercialisée par la Société DSM Xplore, sous la rétérence:15ml Twinscrew Compounder, on introduit 10g d'un mélange de granulés du Polymère P et de l'additif A considéré (Les compositions sont indiquées dans le tableau V ci-dessous). Le temps de mélange et la vitesse des vis sont respectivement fixés à:

t = 4 minutes.

V = 100 rpm.

La température de mélange pour chaque couple additif-polymère est indiquée dans le tableau V ci-dessous.

Les joncs obtenus sont trempés en sortie de filière dans un bain d'eau, recueillis, égouttés puis séchés.

Les joncs collectés sont ensuite traités comme dans les exemples précédents n°20 à 24. Les résultats en rendements pondéraux et taille sont indiqués dans le tableau IV ci-dessous.

**Tableau V**

| Exemple n° | Polymère P | Additif A (% en poids) | Température (°C) | Taille (μm) | Rendement (%) |
|---|---|---|---|---|---|
| 31 | P5 | 40 | 250 | 17.00 | 97 |
| 32 | P6 | 40 | 230 | 25.00 | 76 |
| 33 | P7 | 40 | 275 | 75.00 | 62 |

**Exemple 34:**

Dans cet exemple, les matières utilisées sont un polymère P1 Polyamide 6 de viscosité relative 2.7 et un additif A7 qui est un copolymère polyamide hyperbranché terminé alkyl selon l'exemple 2 de la demande de brevet WO 03/051993.

Dans une mini-extrudeuse bivis conique munie d'un canal de recirculation, commercialisée par la Société DSM Xplore, sous la référence :15ml Twinscrew Compounder, on introduit 10g d'un mélange constitué à 60% en poids de granulés de Polyamide 6 et de 40% en poids de l'additif A7 . Le temps de mélange, la température et la vitesse des vis sont respectivement fixés à:

t = 4 minutes.
T = 250°C
V = 100 rpm.

Les joncs obtenus sont trempés en sortie de filière dans un bain d'eau, recueillis, égouttés puis séchés.
Les joncs collectés sont ensuite dispersés dans le cyclohexane par agitation magnétique. Les observations au microscope optique indique la présence de poudres sphériques de polyamide 6 de taille de 1 à 25 μm.

**Exemples 35-37 :**

Dans ces exemples, les matières utilisées sont un polymère thermoplastique P constitué par un des polymères indiqués ci-dessous :

P1 : Polyamide 6 de viscosité relative 2.7.
P7 : Polyester commercialisé par la Société VIPO-Polymer NK sous la référence 74A40 PC 95.

et d'un additif A8 le copolymère polyethylèneglycol-polyester commercialisé par la Société Rhodia sous la référence Repel-O-Tex SRP6®.
Dans une mini-extrudeuse bivis conique munie d'un canal de recirculation, commercialisée par la Société DSM Xplore, sous la référence :15ml Twinscrew Compounder, on introduit 10g d'un mélange de granulés du Polymère P et de l'additif A8 considéré (Les compositions sont indiquées dans le tableau V ci-dessous) . Le temps de mélange et la vitesse des vis sont respectivement fixés à:

t = 4 minutes.
V = 100 rpm.

La température de mélange pour chaque couple additif-polymère est indiquée dans le tableau VI ci-dessous.
Les joncs obtenus sont trempés en sortie de filière dans un bain d'eau, recueillis, égouttés puis séchés.
Les joncs collectés sont ensuite traités comme dans les exemples précédents n°20 à 24. Les résultats en rendements pondéraux et taille sont indiqués dans le tableau V ci-dessous.

**Tableau VI**

| Exemple n° | Polymère P | Additif A8 (% en poids) | Température (°C) | Taille (μm) | Rendement (%) |
|---|---|---|---|---|---|
| 35 | P1 | 40 | 250 | 155 | 42 |
| 36 | P7 | 20 | 275 | 145 | 43 |
| 37 | P7 | 40 | 275 | 115 | 63 |

## Revendications

1. Procédé de fabrication de poudre en matériau thermoplastique P comprenant des particules de diamètre moyen inférieur à 1 mm, **caractérisé en ce qu'**il consiste à :

   a. Former un mélange fondu dudit matériau thermoplastique P avec un additif A pour obtenir une dispersion de particules discrètes du matériau thermoplastique P, ledit additif A étant formé par un matériau polymérique comprenant au moins une partie de sa structure compatible avec ledit matériau thermoplastique P et au moins une partie de sa structure incompatible et insoluble dans ledit matériau thermoplastique P pour obtenir une dispersion de particules discrètes de matériau,
   b. Refroidir ledit mélange à une température inférieure à la température de ramollissement du matériau thermoplastique P,
   c. Traiter ledit mélange refroidi pour provoquer le délitement des particules discrètes de matériau thermoplastique P.

2. Procédé selon la revendication 1, **caractérisé en ce que** la formation du mélange est obtenue par fusion de matériau thermoplastique P et addition de l'additif A sous forme solide ou fondu et application d'une énergie de mélange pour obtenir la formation des particules discrètes de matériau thermoplastique.

3. Procédé selon la revendication 1, **caractérisé en ce que** la formation du mélange est obtenue par mélange à l'état solide de particules dudit matériau thermoplastique P et des particules dudit additif A, et fusion du mélange de particules avec application sur le mélange fondu d'une énergie de mélange pour obtenir la formation de particules discrètes de matériau thermoplastique.

4. Procédé selon l'une des revendications 1 à 3, **caractérisé en ce que** le concentration pondérale en additif A dans le mélange est comprise entre 1% et 50%.

5. Procédé selon la revendication 4, **caractérisé en ce que** la concentration pondérale en additif A dans le mélange est comprise entre 3% et 30%.

6. Procédé selon l'une des revendications précédentes, **caractérisé en ce que** le mélange fondu est mis en forme avant l'étape de refroidissement.

7. Procédé selon la revendication 6, **caractérisé en ce que** le procédé de mise en forme est un procédé d'extrusion à travers une filière.

8. Procédé selon la revendication 6, **caractérisé en ce que** le mélange fondu est réalisé dans une extrudeuse alimentant la filière d'extrusion.

9. Procédé selon l'une des revendication précédentes, **caractérisé en ce que** le refroidissement est un refroidissement pneumatique.

10. Procédé selon l'une des revendication 1 à 8, **caractérisé en ce** le refroidissement est obtenu par trempage dans un liquide.

11. Procédé selon l'une des revendications précédentes, **caractérisé en ce que** le traitement de délitement des particules en matériau thermoplastique P est obtenu par application d'une force de cisaillement sur le mélange refroidi.

12. Procédé selon l'une de revendications 1 à 10, **caractérisé en ce que** le traitement de délitement des particules en matériau thermoplastique P est obtenu par trempage du mélange fondu refroidi dans un liquide, non solvant du matériau thermoplastique P.

13. Procédé selon la revendication 12, **caractérisé en ce que** le liquide est un solvant de l'additif A.

14. Procédé selon l'une des revendications précédentes, **caractérisé en ce que** les particules formant la poudre de matériau thermoplastique P ont une forme polyhédrique régulier ou irrégulier

15. Procédé selon l'une des revendications précédentes **caractérisé en ce que** le polymère thermoplastique est un polyamide ou un polyester.

16. Procédé selon la revendication 15, **caractérisé en ce que** le polymère thermoplastique est un polyamide choisi dans le groupe comprenant le polyamide 6, le polyamide 6,6, le polyamide 11, le polyamide 12, les polyamides 4,6; 6,10 ; 6,12; 12,12, 6,36, leurs copolymères et alliages.

17. Procédé selon l'une des revendications précédentes, **caractérisé en ce que** le polymère thermoplastique comprend des additifs choisis dans le groupe comprenant les matifiants, les stabilisants chaleur et/ou lumière, les pigments, les colorants, les charges, notamment les charges abrasives.

18. Procédé selon l'une des revendications précédentes, **caractérisé en ce que** l'additif A est un polymère du type bloc, séquence, peigne, hyperbranché, étoile.

19. Procédé selon la revendication 18, **caractérisé en ce que** la structure compatible avec le matériau thermoplastique constitue un bloc d'un polymère type bloc, une séquence d'un polymère séquencé, les dents d'un polymère peigne, le coeur ou les branches d'un polymère étoile ou hyperbranché.

20. Procédé selon la revendication l'une des revendications précédentes, **caractérisé en ce que** la structure compatible de l'additif A comprend des fonctions identiques à celles du polymère thermoplastique.

**21.** Procédé selon l'une des revendications précédentes **caractérisé en ce que** l'additif A est un copolymère bloc D comprenant un bloc de polymère thermoplastique et au moins un bloc de polyoxyde d'alkylène tel que :

- le bloc de polymère thermoplastique comprend une chaîne macromoléculaire étoile ou H comprenant au moins un coeur multifonctionnel et au moins une branche ou un segment de polymère thermoplastique relié au coeur, le coeur comprenant au moins trois fonctions réactives identiques
- le ou les blocs de polyoxyde d'alkylène sont reliés à au moins une partie des extrémités libres de la chaîne macromoléculaire étoile ou H, choisie parmi les extrémités de branche ou segment de polymère thermoplastique et les extrémités du coeur multifonctionnel

**22.** Procédé selon la revendication 21, **caractérisé en ce que** la chaîne macromoléculaire H du bloc de polymère thermoplastique du polymère D est un polyamide H obtenu par copolymérisation à partir d'un mélange de monomères comprenant :

a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,

les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

**23.** Procédé selon la revendication 22, **caractérisé en ce que** le composé multifonctionnel est représenté par la formule (IV)

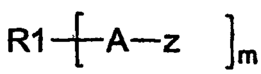

(IV)

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

**24.** Procédé selon la revendication 22 ou 23, **caractérisé en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

**25.** Procédé selon l'une des revendications 21 à 24, **caractérisé en ce que** le bloc de polyoxyde d'alkylène du polymère D est linéaire.

**26.** Procédé selon la revendication 25, **caractérisé en ce que** le bloc de polyoxyde d'alkylène du polymère D est un bloc de polyoxyde d'éthylène.

**27.** Procédé selon l'une des revendications 21 à 26, **caractérisé en ce que** les extrémités libres de la chaîne macromoléculaire du bloc de polymère themoplastique du polymère D sont reliées à un bloc de polyoxyde d'alkylène.

**28.** Procédé selon la revendication 19, **caractérisé en ce que** le polymère hyperbranché E est choisi parmi les polyesters, les polyesteramides, les polyamides.

**29.** Procédé selon la revendication 19 ou 28, **caractérisé en ce que** le polymère hyperbranché E est un copolyamide

hyperbranché du type de ceux obtenus par réaction entre :

- au moins un monomère de formule (I) suivante :

(I) $\mathbf{A\text{-}R\text{-}B_f}$

dans laquelle A est une fonction réactive de polymérisation d'un premier type, B est une fonction réactive de polymérisation d'un second type et capable de réagir avec **A, R** est une entité hydrocarbonée, et f est le nombre total de fonctions réactives B par monomère : $f \geq 2$, de préférence $2 \leq f \leq 10$ ;
- au moins un monomère de formule (**II**) suivante :

(II) **A**'-R'-**B**' ou les lactames correspondants,

dans laquelle A', B', R' ont la même définition que celle donnée ci-dessus respectivement pour **A, B, R** dans la formule **(I)**
- au moins un monomère «coeur» de formule (III) suivante ou au moins un monomère « limiteurs de chaîne » de formule **(IV)** suivante :

(III) $R^1(B'')_n$

dans laquelle :

- $R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- B" est une fonction réactive de même nature que B ou B' ;
- $n \geq 1$, de préférence $1 \leq n \leq 100$

(IV) $R^2\text{-}A''$

dans laquelle :
- $R^2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et **A**" est une fonction réactive de même nature que **A** ou **A'.**

le rapport molaire **I/II** se définissant comme suit :

$$0{,}05 < I/II$$

et de préférence

$$0{,}125 \leq I/II \leq 2\ ;$$

au moins l'une des entités **R** ou **R'** d'au moins l'un des monomères (1) ou (II) étant aliphatique, cycloaliphatique ou arylaliphatique
$R_1$ et/ou $R_2$ étant des radicaux polyoxyalkylènes

**30.** Procédé selon la revendication 29, **caractérisé en ce que** les fonctions réactives de polymérisation **A, B, A', B'** sont choisies dans le groupe comprenant les fonctions carboxyliques et amines.

**31.** Procédé selon la revendication 29 ou 30, **caractérisé en ce que** le monomère de formule **(I)** est un composé dans lequel **A** représente la fonction amine, **B** la fonction carboxylique, R un radical aromatique et f = 2

**32.** Procédé selon l'une des revendications précédentes, **caractérisé en ce que** le mélange comprend un composé B insoluble et non compatible avec le matériau thermoplastique P.

**33.** Procédé selon la revendication 32, **caractérisé en ce que** le composé B a une structure compatible avec au moins une partie de la structure du composé A.

**34.** Procédé selon l'une des revendications 32 ou 33, **caractérisé en ce que** le composé B est choisi parmi les composés appartenant aux familles des polysaccharide, polyoxyalkylèneglycols, polyoléfines.

**35.** Poudre de matériau thermoplastique P susceptible d'être obtenue selon le procédé selon l'une des revendications 1 à 34.

## Claims

**1.** Process for the manufacture of a powder made of thermoplastic material P comprising particles with a mean diameter of less than 1 mm, **characterized in that** it consists in:

a. forming a melt blend of the said thermoplastic material P with an additive A in order to obtain a dispersion of discrete particles of the thermoplastic material P, the said additive A being formed by a polymeric material comprising at least a portion of its structure compatible with the said thermoplastic material P and at least a portion of its structure incompatible with and insoluble in the said thermoplastic material P in order to obtain a dispersion of discrete particles of material,
b. cooling the said blend to a temperature below the softening temperature of the thermoplastic material P,
c. treating the said cooled blend in order to bring about the disintegration of the discrete particles of thermoplastic material P.

**2.** Process according to Claim 1, **characterized in that** the formation of the blend is obtained by melting thermoplastic material P and adding the additive A in a solid or molten form and applying a blending energy in order to obtain the formation of the discrete particles of thermoplastic material.

**3.** Process according to Claim 1, **characterized in that** the formation of the blend is obtained by blending particles of the said thermoplastic material P and particles of the said additive A in the solid state and melting the blend of particles with application to the melt blend of a blending energy in order to obtain the formation of discrete particles of thermoplastic material.

**4.** Process according to one of Claims 1 to 3, **characterized in that** the concentration by weight of additive A in the blend is between 1% and 50%.

**5.** Process according to Claim 4, **characterized in that** the concentration by weight of additive A in the blend is between 3% and 30%.

**6.** Process according to one of the preceding claims, **characterized in that** the melt blend is shaped before the cooling stage.

**7.** Process according to Claim 6, **characterized in that** the shaping process is a process of extrusion through a die.

**8.** Process according to Claim 6, **characterized in that** the melt blend is produced in an extruder feeding the extrusion die.

**9.** Process according to one of the preceding claims, **characterized in that** the cooling is pneumatic cooling.

**10.** Process according to one of Claims 1 to 8, **characterized in that** the cooling is obtained by dipping in a liquid.

**11.** Process according to one of the preceding claims, **characterized in that** the disintegration treatment on the particles made of thermoplastic material P is obtained by application of a shear force to the cooled blend.

**12.** Process according to one of Claims 1 to 10, **characterized in that** the disintegration treatment on the particles

made of thermoplastic material P is obtained by dipping the cooled melt blend in a liquid which is not a solvent for the thermoplastic material P.

**13.** Process according to Claim 12, **characterized in that** the liquid is a solvent for the additive A.

**14.** Process according to one of the preceding claims, **characterized in that** the particles forming the powder of thermoplastic material P have a regular or irregular polyhedral shape.

**15.** Process according to one of the preceding claims, **characterized in that** the thermoplastic polymer is a polyamide or a polyester.

**16.** Process according to Claim 15, **characterized in that** the thermoplastic polymer is a polyamide chosen from the group consisting of polyamide 6, polyamide 6,6, polyamide 11, polyamide 12, polyamide 4,6, polyamide 6,10, polyamide 6,12, polyamide 12,12, polyamide 6,36, their copolymers and their alloys.

**17.** Process according to one of the preceding claims, **characterized in that** the thermoplastic polymer comprises additives chosen from the group consisting of matifying agents, heat and/or light stabilizers, pigments, dyes and fillers, in particular abrasive fillers.

**18.** Process according to one of the preceding claims, **characterized in that** the additive A is a polymer of the block, sequence, comb, hyperbranched or star type.

**19.** Process according to Claim 18, **characterized in that** the structure compatible with the thermoplastic material constitutes a block of a block-type polymer, a sequence of a sequential polymer, the teeth of a comb polymer, or the core or branches of a star or hyperbranched polymer.

**20.** Process according to one of the preceding claims, **characterized in that** the compatible structure of the additive A comprises functional groups identical to those of the thermoplastic polymer.

**21.** Process according to one of the preceding claims, **characterized in that** the additive A is a block copolymer D comprising a block of thermoplastic polymer and at least one block of polyalkylene oxide, such that:

- the block of thermoplastic polymer comprises a star macromolecular chain or macromolecular chain H comprising at least one polyfunctional core and at least one branch or one segment of thermoplastic polymer connected to the core, the core comprising at least three identical reactive functional groups,
- the block or blocks of polyalkylene oxide are connected to at least a portion of the free ends of the star macromolecular chain or macromolecular chain H which are chosen from the thermoplastic polymer branch or segment ends and the ends of the polyfunctional core.

**22.** Process according to Claim 21, **characterized in that** the macromolecular chain H of the block of thermoplastic polymer of the polymer D is a polyamide H obtained by copolymerization starting from a mixture of monomers comprising:

a) a polyfunctional compound comprising at least three identical or reactive functional groups chosen from the amine functional group and the carboxylic acid functional group,
b) lactams and/or amino acids,
c) a difunctional compound chosen from dicarboxylic acids or diamines,
d) a monofunctional compound, the functional group of which is either an amine functional group or a carboxylic acid functional group,

the functional groups of c) and d) being amine when the functional groups of a) are acid, the functional groups of c) and d) being acid when the functional groups of a) are amine, the ratio as equivalents of the functional groups of a) to the sum of the functional groups of c) and d) being between 1.5 and 0.66, and the ratio as equivalents of the functional groups of c) to the functional groups of d) being between 0.17 and 1.5.

**23.** Process according to Claim 22, **characterized in that** the polyfunctional compound is represented by the formula (IV):

$$R1\left[A-Z\right]_m \quad (IV)$$

in which:

- R1 is a linear or cyclic, aromatic or aliphatic, hydrocarbon radical which comprises at least two carbon atoms and which can comprise heteroatoms,
- A is a covalent bond or an aliphatic hydrocarbon radical comprising from 1 to 6 carbon atoms,
- Z represents a primary amine radical or a carboxylic acid radical,
- m is an integer between 3 and 8.

**24.** Process according to Claim 22 or 23, **characterized in that** the polyfunctional compound is chosen from 2,2,6,6-tetra(β-carboxyethyl)cyclohexanone, trimesic acid, 2,4,6-tri(aminocaproic acid)-1,3,5-triazine or 4-aminoethyl-1,8-octanediamine.

**25.** Process according to one of Claims 21 to 24, **characterized in that** the block of polyalkylene oxide of the polymer D is linear.

**26.** Process according to Claim 25, **characterized in that** the block of polyalkylene oxide of the polymer D is a block of polyethylene oxide.

**27.** Process according to one of Claims 21 to 26, **characterized in that** the free ends of the macromolecular chain of the block of thermoplastic polymer of the polymer D are connected to a block of polyalkylene oxide.

**28.** Process according to Claim 19, **characterized in that** the hyperbranched polymer E is chosen from polyesters, polyesteramides or polyamides.

**29.** Process according to Claim 19 or 28, **characterized in that** the hyperbranched polymer E is a hyperbranched copolyamide of the type of those obtained by reaction between:

- at least one monomer of the following formula (I) :

(I) $A\text{-}R\text{-}B_f$

in which A is a polymerization reactive functional group of a first type, B is a polymerization reactive functional group of a second type which is capable of reacting with A, R is a hydrocarbon entity and f is the total number of B reactive functional groups per monomer: $f \geq 2$, preferably $2 \leq f \leq 10$;

- at least one monomer of the following formula (**II**) :

(II) **A**'-R'-**B**' or the corresponding lactams,

in which **A**', **B**' and **R**' have the same definition as that given above for **A**, **B** and **R** respectively in the formula (**I**);

- at least one "core" monomer of the following formula (III) or at least one "chain-limiting" monomer of the following formula (IV):

(III) $R^1(B'')_n$

in which:

- $R^1$ is a substituted or unsubstituted hydrocarbon radical of the silicone, linear or branched alkyl, aromatic, alkylaryl, arylalkyl or cycloaliphatic type which can comprise unsaturations and/or heteroatoms;
- B" is a reactive functional group of the same nature as **B** or **B';**
- $n \geq 1$, preferably $1 \leq n \leq 100$;

(IV) $R^2\text{-}A''$

in which:

- $R^2$ is a substituted or unsubstituted hydrocarbon radical of the silicone, linear or branched alkyl, aromatic, arylalkyl, alkylaryl or cycloaliphatic type which can comprise one or more unsaturations and/or one or more heteroatoms;
- and **A"** is a reactive functional group of the same nature as A or A';

the molar ratio **I/II** being defined as follows:

$$0.05 < \mathbf{I/II}$$

and preferably

$$0.125 \leq \mathbf{I/II} \leq 2;$$

at least one of the entities **R** or **R'** of at least one of the monomers (I) or (II) being aliphatic, cycloaliphatic or arylaliphatic; $R^1$ and/or $R^2$ being polyoxyalkylene radicals.

**30.** Process according to Claim 29, **characterized in that** the polymerization reactive functional groups **A, B, A'** and **B'** are chosen from the group consisting of the carboxyl and amine functional groups.

**31.** Process according to Claim 29 or 30, **characterized in that** the monomer of formula (I) is a compound in which A represents the amine functional group, **B** represents the carboxyl functional -group, R represents an aromatic radical and f = 2.

**32.** Process according to one of the preceding claims, **characterized in that** the blend comprises a compound B which is insoluble in and incompatible with the thermoplastic material P.

**33.** Process according to Claim 32, **characterized in that** the compound B has a structure compatible with at least a portion of the structure of the compound A.

**34.** Process according to either of Claims 32 and 33, **characterized in that** the compound B is chosen from compounds belonging to the families of the polysaccharides, polyoxyalkylene glycols and polyolefins.

**35.** Powder formed of thermoplastic material P capable of being obtained according to the process according to one of Claims 1 to 34.

## Patentansprüche

**1.** Verfahren zur Herstellung von Pulver aus thermoplastischem Material P, enthaltend Teilchen mit einem mittleren Durchmesser von weniger als 1 mm, **dadurch gekennzeichnet, daß** man:

a. eine schmelzflüssige Mischung des thermoplastischen Materials P mit einem Additiv A zum Erhalt einer Dispersion von diskreten Teilchen des thermoplastischen Materials P bildet, wobei das Additiv A durch ein Polymermaterial mit einer Struktur, die zumindest zum Teil mit dem thermoplastischen Material P verträglich ist und zumindest zum Teil unverträglich und in dem thermoplastischen Material P unlöslich ist, gebildet wird, zum Erhalt einer Dispersion von diskreten Materialteilchen,
b. die Mischung auf eine Temperatur unter der Erweichungstemperatur des thermoplastischen Materials P abkühlt,
c. die abgekühlte Mischung zur Bewirkung des Zerfalls der diskreten Teilchen aus dem thermoplastischen Material P behandelt.

**2.** Verfahren nach Anspruch 1, **dadurch gekennzeichnet, daß** die Bildung der Mischung durch Schmelzen von thermoplastischem Material P und Zugabe des Additivs A in fester oder schmelzflüssiger Form und Anwendung einer Mischenergie zum Erhalt der Bildung von diskreten Teilchen aus thermoplastischem Material erhalten wird.

3. Verfahren nach Anspruch 1, **dadurch gekennzeichnet, daß** die Bildung der Mischung durch Mischen von Teilchen aus dem thermoplastischen Material P und Teilchen des Additivs A in festem Zustand und Schmelzen des Teilchengemischs mit Anwendung einer Mischenergie auf die schmelzflüssigen Teilchen zum Erhalt der Bildung von diskreten Teilchen aus thermoplastischem Material erhalten wird.

4. Verfahren nach einem der Ansprüche 1 bis 3, **dadurch gekennzeichnet, daß** die Konzentration an Additiv A in der Mischung zwischen 1 und 50 Gew.-% liegt.

5. Verfahren nach Anspruch 4, **dadurch gekennzeichnet, daß** die Konzentration an Additiv A in der Mischung zwischen 3 und 30 Gew.-% liegt.

6. Verfahren nach einem der vorhergehenden Ansprüche, **dadurch gekennzeichnet, daß** man die schmelzflüssige Mischung vor dem Abkühlschritt formt.

7. Verfahren nach Anspruch 6, **dadurch gekennzeichnet, daß** es sich bei dem Formgebungsschritt um ein Verfahren der Extrusion durch eine Düse handelt.

8. Verfahren nach Anspruch 6, **dadurch gekennzeichnet, daß** man die schmelzflüssige Mischung in einem die Extrusionsdüse speisenden Extruder durchführt.

9. Verfahren nach einem der vorhergehenden Ansprüche, **dadurch gekennzeichnet, daß** es sich bei dem Abkühlen um ein Abkühlen mit Druckluft handelt.

10. Verfahren nach einem der Ansprüche 1 bis 8, **dadurch gekennzeichnet, daß** man das Abkühlen durch Eintauchen in eine Flüssigkeit erhält.

11. Verfahren nach einem der vorhergehenden Ansprüche, **dadurch gekennzeichnet, daß** man die Zerfallsbehandlung der Teilchen aus dem thermoplastischen Material P durch Anwendung einer Scherkraft auf die abgekühlte Mischung erhält.

12. Verfahren nach einem der Ansprüche 1 bis 10, **dadurch gekennzeichnet, daß** man die Zerfallsbehandlung der Teilchen aus dem thermoplastischen Material P durch Eintauchen der abgekühlten schmelzflüssigen Mischung in eine Flüssigkeit, bei der es sich um ein Nichtlösungsmittel für das thermoplastische Material P handelt, erhält.

13. Verfahren nach Anspruch 12, **dadurch gekennzeichnet, daß** es sich bei der Flüssigkeit um ein Lösungsmittel für das Additiv A handelt.

14. Verfahren nach einem der vorhergehenden Ansprüche, **dadurch gekennzeichnet, daß** die das Pulver aus thermoplastischem Material P bildenden Teilchen eine reguläre oder irreguläre polyedrische Form aufweisen.

15. Verfahren nach einem der vorhergehenden Ansprüche, **dadurch gekennzeichnet, daß** es sich bei dem thermoplastischen Polymer um ein Polyamid oder einen Polyester handelt.

16. Verfahren nach Anspruch 15, **dadurch gekennzeichnet, daß** es sich bei dem thermoplastischen Polymer um ein Polyamid aus der Gruppe bestehend aus Polyamid 6, Polyamid 6,6, Polyamid 11, Polyamid 12, Polyamid 4,6, Polyamid 6,10, Polyamid 6,12, Polyamid 12,12, Polyamid 6,36, Copolymeren und Legierungen davon handelt.

17. Verfahren nach einem der vorhergehenden Ansprüche, **dadurch gekennzeichnet, daß** das thermoplastische Polymer Additive aus der Gruppe bestehend aus Mattierungsmitteln, Wärme- und/oder Lichtstabilisatoren, Pigmenten, Farbmitteln und Füllstoffen, insbesondere abrasiven Füllstoffen, enthält.

18. Verfahren nach einem der vorhergehenden Ansprüche, **dadurch gekennzeichnet, daß** es sich bei dem Additiv A um ein Blockpolymer, Sequenzpolymer, Kammpolymer, hyperverzweigtes Polymer oder Sternpolymer handelt.

19. Verfahren nach Anspruch 18, **dadurch gekennzeichnet, daß** es sich bei der mit dem thermoplastischen Material verträglichen Struktur um einen Block eines Blockpolymers, eine Sequenz eines Sequenzpolymers, die Zähne eines Kammpolymers, den Kern oder die Verzweigungen eines Sternpolymers oder hyperverzweigten Polymers handelt.

**20.** Verfahren nach einem der vorhergehenden Ansprüche, **dadurch gekennzeichnet, daß** die mit dem Additiv A verträgliche Struktur die gleichen Funktionen enthält wie das thermoplastische Polymer.

**21.** Verfahren nach einem der vorhergehenden Ansprüche, **dadurch gekennzeichnet, daß** es sich bei dem Additiv A um ein solches Blockcopolymer D mit einem Block aus thermoplastischem Polymer und mindestens einem Polyalkylenoxid-Block handelt, daß:

- der Block aus thermoplastischem Polymer eine sternförmige makromolekulare Kette oder makromolekulare Kette H mit mindestens einem multifunktionellen Kern und mindestens einer Verzweigung oder einem an den Kern gebundenen Segment aus thermoplastischem Polymer enthält, wobei der Kern mindestens drei identische reaktive Funktionen enthält
- der oder die Polyalkylenoxid-Blöcke an mindestens einen Teil der freien Enden der sternförmigen makromolekularen Kette oder makromolekularen Kette H, ausgewählt unter Enden einer Verzweigung oder eines Segments aus thermoplastischem Polymer und Enden des multifunktionellen Kerns, gebunden sind.

**22.** Verfahren nach Anspruch 21, **dadurch gekennzeichnet, daß** die makromolekulare Kette H des Blocks aus thermoplastischem Polymer des Polymers D ein durch Copolymerisation einer Monomerenmischung, enthaltend:

a) eine multifunktionelle Verbindung mit mindestens drei identischen reaktiven Funktionen, ausgewählt unter der Aminfunktion und der Carbonsäurefunktion
b) Lactame und/oder Aminosäuren
c) eine difunktionelle Verbindung, ausgewählt unter Dicarbonsäuren oder Diaminen,
d) eine monofunktionelle Verbindung, bei deren Funktion es sich um eine Aminfunktion oder eine Carbonsäurefunktion handelt,

wobei es sich bei den Funktionen von c) und d) um Amin handelt, wenn es sich bei den Funktionen von

a) um Säure handelt, es sich bei den Funktionen von c) und d) um Säure handelt, wenn es sich bei den Funktionen von a) um Amin handelt, das Äquivalentverhältnis zwischen den funktionellen Gruppen von a) und der Summe der funktionellen Gruppen von c) und d) zwischen 1,5 und 0,66 liegt und das Äquivalentverhältnis zwischen den funktionellen Gruppen von c) und den funktionellen Gruppen von d) zwischen 0,17 und 1,5 liegt, erhaltenes Polyamid H handelt.

**23.** Verfahren nach Anspruch 22, **dadurch gekennzeichnet, daß** die multifunktionelle Verbindung durch die Formel (IV) wiedergegeben wird:

$$R1 \left[ A - z \right]_m \qquad (IV)$$

worin:

- $R_1$ für einen linearen oder cyclischen, aromatischen oder aliphatischen Kohlenwasserstoffrest, der mindestens zwei Kohlenstoffatome enthält und Heteroatome enthalten kann, steht,
- A für eine kovalente Bindung oder einen aliphatischen Kohlenwasserstoffrest mit 1 bis 6 Kohlenstoffatomen steht,
- Z für einen primären Aminrest oder einen Carbonsäurerest steht,
- m für eine ganze Zahl zwischen 3 und 8 steht.

**24.** Verfahren nach Anspruch 22 oder 23, **dadurch gekennzeichnet, daß** man die multifunktionelle Verbindung unter 2,2,6,6-Tetra(β-carboxyethyl)-cyclohexanon, Trimesinsäure, 2,4,6-Tri(aminocapronsäure)-1,3,5-triazin und 4-Aminoethyl-1,8-octandiamin auswählt.

**25.** Verfahren nach einem der Ansprüche 21 bis 24, **dadurch gekennzeichnet, daß** der Polyalkylenoxid-Block des Polymers D linear ist.

**26.** Verfahren nach Anspruch 25, **dadurch gekennzeichnet, daß** es sich bei dem Polyalkylenoxid-Block des Polymers

D um einen Polyethylenoxid-Block handelt.

**27.** Verfahren nach einem der Ansprüche 21 bis 26, **dadurch gekennzeichnet, daß** die freien Enden der makromolekularen Kette des Blocks aus thermoplastischem Polymer des Polymers D an einen Polyalkylenoxid-Block gebunden sind.

**28.** Verfahren nach Anspruch 19, **dadurch gekennzeichnet, daß** das hyperverzweigte Polymer E unter Polyestern, Polyesteramiden oder Polyamiden ausgewählt ist.

**29.** Verfahren nach Anspruch 19 oder 28, **dadurch gekennzeichnet, daß** es sich bei dem hyperverzweigten Polymer E um ein hyperverzweigtes Copolyamid vom Typ derjenigen handelt, die durch Umsetzung von:

- mindestens einem Monomer der folgenden Formel (I) :

(I) $A\text{-}R\text{-}B_f$

worin A für eine polymerisationsreaktive Funktion eines ersten Typs steht, B für eine polymerisationsreaktive Funktion eines zweiten Typs steht und mit A reagieren kann, R für eine Kohlenwasserstoffeinheit steht und f für die Gesamtzahl an reaktiven Funktionen B pro Monomer steht: $f \geq 2$, vorzugsweise $2 \leq f \leq 10$;
- mindestens einem Monomer der folgenden Formel (II):

(II) A'-R'-B' oder den entsprechenden Lactamen

worin A', B' und R' wie oben für A, B und R in Formel (I) definiert sind,
- mindestens einem "Kern"-Monomer der folgenden Formel (III) oder mindestens einem "Ketten-abbruch"-Monomer der folgenden Formel (IV):

(III) $R^1(B'')_n$

worin:

- $R^1$ für einen gegebenenfalls substituierten Kohlenwasserstoffrest vom Typ Silikon, Typ lineares oder verzweigtes Alkyl, aromatischen Typ, Typ Alkylaryl, Typ Arylalkyl oder cycloaliphatischen Typ, der Ungesättigtheiten und/oder Heteroatome enthalten kann, steht;
- B" für eine reaktive Funktion der gleichen Art wie B oder B' steht;
- $n \geq 1$, vorzugsweise $1 \leq n \leq 100$;

(IV) $R^2\text{-}A''$

worin:
- $R^2$ für einen gegebenenfalls substituierten Kohlenwasserstoffrest vom Typ Silikon, Typ lineares oder verzweigtes Alkyl, aromatischen Typ, Typ Alkylaryl, Typ Arylalkyl oder cycloaliphatischen Typ, der Ungesättigtheiten und/oder Heteroatome enthalten kann, steht;
- und A" für eine reaktive Funktion der gleichen Art wie A oder A' steht;

wobei das Molverhältnis I/II folgendermaßen definiert ist:

$$0{,}05 > I/II$$

und vorzugsweise

$$0{,}125 \leq I/II \leq 2;$$

wobei mindestens eine der Einheiten R oder R' mindestens eines der Monomere (I) oder (II) aliphatisch, cycloaliphatisch oder arylaliphatisch ist,
wobei $R_1$ und/oder $R_2$ Polyoxyalkylenreste sind,

erhalten werden.

**30.** Verfahren nach Anspruch 29, **dadurch gekennzeichnet, daß** man die polymerisationsreaktiven Funktionen A, B, A' und B' aus der Gruppe bestehend aus Carboxyl- und Aminfunktionen auswählt.

**31.** Verfahren nach Anspruch 29 oder 30, **dadurch gekennzeichnet, daß** es sich bei dem Monomer der Formel (I) um eine Verbindung handelt, in der A für eine Aminfunktion steht, B für eine Carboxylfunktion steht, R für einen aromatischen Rest steht und f = 2 ist.

**32.** Verfahren nach einem der vorhergehenden Ansprüche, **dadurch gekennzeichnet, daß** die Mischung eine unlösliche und mit dem thermoplastischen Material P unverträgliche Verbindung B enthält.

**33.** Verfahren nach Anspruch 32, **dadurch gekennzeichnet, daß** die Verbindung B eine mit zumindest einem Teil der Struktur der Verbindung A verträgliche Struktur aufweist.

**34.** Verfahren nach einem der Ansprüche 32 oder 33, **dadurch gekennzeichnet, daß** man die Verbindung B unter Verbindungen aus den Familien der Polysaccharide, Polyoxyalkylenglykole oder Polyolefine auswählt.

**35.** Pulver aus thermoplastischem Material P, das nach dem Verfahren nach einem der Ansprüche 1 bis 34 erhältlich ist.

FIG I

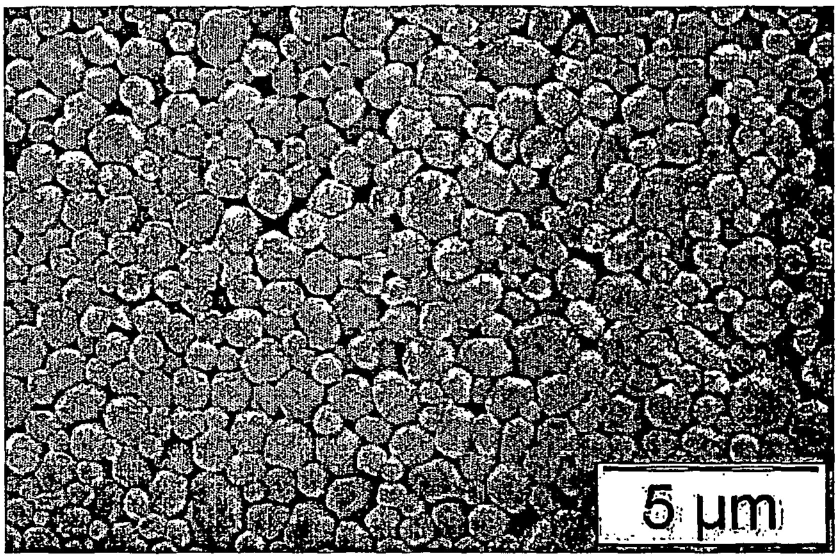

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9406059 A
- JP 2001114901 B
- FR 2743077
- FR 2779730
- US 5959069 A
- EP 0632703 A
- EP 0682057 A
- EP 0832149 A
- WO 05019510 A
- WO 03002668 A
- WO 0068298 A1
- WO 03051993 A